# EUROPEAN PATENT SPECIFICATION

(11) **EP 2 974 949 B1**
(45) Date of publication and mention of the grant of the patent: **15.02.2017**
(21) Application number: 14194887.7
(22) Date of filing: 26.11.2014
(51) Int. Cl.: B62J 6/00, B62J 6/02, B62J 17/02

(54) **SADDLE TYPE VEHICLE**
SATTELFAHRZEUG
VÉHICULE DE TYPE À SELLE

(30) Priority: 15.07.2014 JP 2014145286
(43) Date of publication of application: 20.01.2016
(73) Proprietor: Yamaha Hatsudoki Kabushiki Kaisha, Iwata-shi, Shizuoka 438-8501 (JP)
(72) Inventor: Takesako, Wahei, Iwata-shi, Shizuoka 438-8501 (JP)
(74) Representative: Grünecker Patent- und Rechtsanwälte PartG mbB

(56) References cited:
- JP-A- 2009 202 825
- JP-A- 2013 112 296

## Description

The present invention relates to a saddle type vehicle according to the preamble of **independent claim 1. Such a saddle type vehicle can be taken from the prior art document** JP 2013-112296 A.

TW 201339025 A discloses a saddle type vehicle. This saddle type vehicle includes a frame, an exterior cover that covers the frame, a seat supported by the frame via a housing box, a head lamp that emits light forwardly, and two position lamps disposed on the right side and on the left side of the head lamp, respectively.

The frame of the saddle type vehicle described above includes a head tube and a main frame that extends downwardly from the head tube. The exterior cover includes a front cover disposed in front of the head tube. A rider (driver)'s legs are disposed in a space provided between the seat and head tube.

The head lamp and position lamps of the saddle type vehicle described above are disposed in the front cover. The head lamp and position lamps respectively include clear covers disposed in front of light sources. The respective clear covers are exposed from an open portion included in the front cover. The rear end portion of the clear cover of the head lamp is located further to the rear than the front end of the position lamp.

The front cover includes a partition cover portion that defines a portion of the open portion, and separates the head lamp and position lamp. The partition cover portion is cantilever portion. The partition cover portion includes a front end disposed between the clear cover of the head lamp and the clear cover of the position lamp in a side view and an inner edge and outer edge that extend rearward from the front end. The front end of the partition cover portion is not connected to another portion of the front cover.

In the saddle type vehicle described above, for improving the visibility of the head lamp and position lamp, the vehicle makes the lights of the head lamp and position lamp easily distinguishable by separating the head lamp and position lamp with the partition cover portion of the front cover. The rear end of the inner edge of the partition cover portion is disposed at substantially the same position as the rear end of the clear cover of the head lamp in the front-rear direction. The rear end of the outer edge of the partition cover portion is disposed at substantially the same position as the rear end of the clear cover of the position lamp in the front-rear direction.

In order to secure the strength necessary for the partition cover portion, the partition cover portion has been broadened in width (length between the inner edge and outer edge of the partition cover portion) within a range where the sizes of the clear covers required for the head lamp and position lamp can be secured.

There is a demand for securing the compactness of the saddle type vehicle while improving the visibility of the lamps by making the exposed area of the clear covers larger to increase the light quantity. In order to meet the demand, it can be considered to reduce the width of the partition cover portion that separates the head lamp and position lamp so as to increase the exposed area of the clear covers. However, because narrowing the partition cover portion leads to a decline in the strength (bending strength) of the partition cover portion, the partition cover portion is easily bent when external force is applied to the partition cover portion.

It is an object of the present invention to provide a saddle type vehicle capable of maintaining the compactness of the vehicle and the strength of the partition cover portion, while improving the visibility of the two lamps disposed in a front portion of the vehicle. This object is achieved by the saddle type vehicle of claim 1. Preferred embodiments are laid down in the dependent claims.

In order to overcome the previously unrecognized and unsolved challenges described above, a preferred embodiment provides a saddle type vehicle including a frame, a head lamp, a first side lamp, and a front cover.

The frame includes a head tube. The head lamp includes a head lamp light source and a head lamp clear cover disposed in front of the head lamp light source. The first side lamp includes a first side lamp light source and a first side lamp clear cover disposed in front of the first side lamp light source. The first side lamp is disposed outside of the head lamp in a vehicle width direction. At least a portion of the front cover is disposed in front of the head tube. The head lamp and the first side lamp are disposed in the front cover. A rear end of the head lamp clear cover is disposed at a more rearward position than a front end of the first side lamp clear cover.

The front cover includes a base cover, and a separate cover. The base cover includes an open portion at which the head lamp clear cover and the first side lamp clear cover are exposed. The base cover and the separate cover are separate members. The separate cover is attached to the base cover.

The separate cover includes a partition cover portion which separates the head lamp clear cover and the first side lamp clear cover. At least a portion of the partition cover portion is disposed between the head lamp clear cover and the first side lamp clear cover. A front end of the partition cover portion is not connected to another portion of the front cover. An outer edge of the partition cover portion extends rearward from the front end of the partition cover portion. An inner edge of the partition cover portion is disposed at a more inward position than the outer edge of the partition cover portion in the vehicle width direction in a front view, and extends rearward from the front end of the partition cover portion. Both of the inner edge and outer edge of the partition cover portion extend rearward from the front end of the partition cover portion to a more rearward position than at least one of the rear end of the head lamp clear cover and a rear end of the first side lamp clear cover.

According to this arrangement, because the partition cover portion of the separate cover separates the head lamp and the first side lamp, the visibility of the head lamp and the first side lamp is improved.

Also, the partition cover portion is formed separately from the base cover. The rear ends of both of the inner edge and outer edge of the partition cover portion are located further to the rear than at least one of the rear end of the head lamp clear cover and the rear end of the first side lamp clear cover. In other words, the partition cover portion has secured no less than a length necessary for separating the head lamp and the first side lamp, and the partition cover portion is thus long.

Because the partition cover portion is long, the partition cover portion easily flexes.
Thus, even if external force is applied to the partition cover portion, the external force can be dispersed or absorbed by flexure (elastic deformation) of the partition cover portion. A bending strength necessary for the partition cover portion is accordingly easily secured. Therefore, the partition cover portion to separate the head lamp clear cover and the first side lamp clear cover can be narrowed, so that the exposed area of the head lamp clear cover and the first side lamp clear cover can be increased. Thereby, the visibility of the head lamp and the first side lamp can be further improved.

Accordingly, the compactness of the vehicle and the strength of the partition cover portion can be maintained, while the visibility of the head lamp and the first side lamp disposed in the front portion of the vehicle can be improved.

In the preferred embodiment, at least a portion of the inner edge and outer edge of the partition cover portion may be disposed at a more outward position than the front end of the partition cover portion in the vehicle width direction.

According to this arrangement, at least a portion of the inner edge and outer edge of the partition cover portion is shifted outward with respect to the front end of the partition cover portion. Thus, as compared with when the inner edge and the outer edge of the partition cover portion extend rearward at the same position as that of the front end of the partition cover portion in the vehicle width direction, the partition cover portion can be lengthened. Thereby, the length of the partition cover portion in the front-rear direction can be kept down, while the overall length of the partition cover portion (length from the front end of the partition cover portion to the rear end of the partition cover portion) can be increased. Accordingly, the separate cover provided with the partition cover portion can be made compact in the front-rear direction, while the strength of the partition cover portion can be improved.

In the preferred embodiment, the base cover may further include a base fastening portion at least a portion of which is disposed between the head lamp and first side lamp. The base fastening portion may be fastened with a fastening member to at least one of the head lamp and first side lamp. The partition cover portion may be overlapped with the base fastening portion such that the fastening member is hidden by the partition cover portion.

According to this arrangement, at least one of the head lamp and the first side lamp is supported by the base cover. Thus, a lamp support portion to support at least one of the head lamp and the first side lamp is not necessarily provided for the separate cover. Therefore, a restriction in the shape of the partition cover portion by a lamp support portion can be avoided, and the degree of freedom in the shape of the partition cover portion can be increased. Thereby, for example, by further narrowing a front end portion of the partition cover portion, the exposed area of the head lamp clear cover and the first side lamp clear cover can be increased. Thus, the visibility of the head lamp and the first side lamp can be enhanced.

In the preferred embodiment, a projection portion projecting in an overlapping direction of the partition cover portion and the base fastening portion may be included in one of the partition cover portion and the base fastening portion, and a fitting hole into which the projection portion is inserted to restrict a relative movement of the partition cover portion and the base fastening portion may be included in the other of the partition cover portion and the base fastening portion.

According to this arrangement, the partition cover portion is attached to the base fastening portion with a simple arrangement including the projection portion and the fitting hole. In other words, there is no need to provide a complicated arrangement to attach the partition cover portion to the base fastening portion, and thus a space to dispose the head lamp clear cover and the first side lamp clear cover is not limited by the above complicated arrangement. Thus, the visibility of the head lamp and the first side lamp can be further improved.

The base cover may further includes an exposed portion extending along the inner edge of the partition cover portion and externally exposed at a more inward position than the partition cover portion in the vehicle width direction.

According to this arrangement, because the exposed portion of the base cover extends along the inner edge of the partition cover portion, the inner edge of the partition cover portion is emphasized. Thereby, the head lamp clear cover and the first side lamp clear cover can be more clearly separated by the partition cover portion.

The exposed portion includes a groove portion extending along the inner edge of the partition cover portion.

According to this arrangement, because the groove portion of the base cover is disposed along the inner edge of the partition cover portion, there is a space along the inner edge of the partition cover portion. Therefore, when an upward external force is applied to the partition cover portion, a movement of the partition cover portion due to flexure is unlikely to be restricted. Thus, the partition cover portion can disperse or absorb the external force by flexure (elastic deformation). A necessary strength can thereby be secured in the partition cover portion.

In the preferred embodiment, in a side view, a front end of the head lamp clear cover may be disposed at a more forward position than the front end of the first side lamp clear cover. Further, in the side view, the rear end of the head lamp clear cover may be disposed at a more forward position than the rear end of the first side lamp clear cover.

According to this arrangement, because, in a side view, the front end of the head lamp clear cover is shifted forward with respect to the front end of the first side lamp clear cover, the visibility of the front end of the head lamp when the saddle type vehicle is viewed from its lateral side is improved. Similarly, because, in a side view, the rear end of the first side lamp clear cover is shifted rearward with respect to the rear end of the head lamp clear cover, the visibility of the rear end of the first side lamp when the saddle type vehicle is viewed from its lateral side is improved. Thereby, the visibility of the head lamp and the first side lamp can be further improved.

In the preferred embodiment, the saddle type vehicle may further include a second side lamp disposed between the head lamp and the partition cover portion and between the first side lamp and the partition cover portion.

According to this arrangement, because the inner edge and the outer edge of the partition cover portion to separate the head lamp and the first side lamp are illuminated with the second side lamp, the partition cover portion is further distinct. Thereby, the visibility of the head lamp and the first side lamp can be further improved.

In the preferred embodiment, the second side lamp may include a second side lamp light source covered with the partition cover portion at least in the front view, and a lighting body at least a portion of which is disposed at a more forward position than the second side lamp light source, and which is configured to diffuse and transmit light of the second side lamp light source. The lighting body may include a first lighting portion extending along the partition cover portion between the head lamp and the partition cover portion, a second lighting portion extending along the partition cover portion between the first side lamp and the partition cover portion, and a connecting lighting portion to connect the first lighting portion and the second lighting portion each other at a lower position than the partition cover portion.

According to this arrangement, the partition cover portion is bordered with the second side lamp to be emphasized. The head lamp and the first side lamp are separated by the partition cover portion emphasized with the second side lamp. Thus, the visibility of the head lamp and the first side lamp can be further improved. comprise

In the preferred embodiment, the saddle type vehicle may comprise two of the first side lamps disposed on a right side and on a left side of the head lamp, respectively. In this case, the separate cover may include two of the partition cover portions disposed at both sides of the head lamp in the vehicle width direction and separating the first side lamp on the right side and the head lamp and separating the first side lamp on the left side and the head lamp, and an upper cover portion disposed over the head lamp in the front view and connecting upper end portions of the two partition cover portions to each other.

According to this arrangement, the two first side lamps are disposed on the right side and on the left side of the head lamp, respectively. The right first side lamp and the head lamp are separated by the right partition cover portion, and the left first side lamp and the head lamp are separated by the left partition cover portion. Thereby, the visibility of both the first side lamps can be improved.

In the preferred embodiment, the inner edge of the partition cover portion may extend rearward from the front end of the partition cover portion to a more rearward position than both of the rear end of the head lamp clear cover and the rear end of the first side lamp clear cover. The outer edge of the partition cover portion may extend rearward from the front end of the partition cover portion to a more rearward position than both of the rear end of the head lamp clear cover and the rear end of the first side lamp clear cover.

According to this arrangement, the rear end of the inner edge of the partition cover portion is disposed further to the rear than both of the head lamp clear cover and the first side lamp clear cover. Further, the rear end of the outer edge of the partition cover portion is disposed further to the rear than both of the head lamp clear cover and the first side lamp clear cover. Because the partition cover portion is thereby further lengthened, the compactness of the vehicle and the strength of the partition cover portion can be maintained, while the visibility of the head lamp and the first side lamp disposed in the front portion of the vehicle can be improved.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a saddle type vehicle according to a preferred embodiment.
FIG. 2 is a left side view of a front portion of the saddle type vehicle.
FIG. 3 is a front view of the saddle type vehicle.
FIG. 4 is a plan view of the front portion of the saddle type vehicle.
FIG. 5 is a left side view of a front cover and front lamp unit.
FIG. 6 is a front view of the front cover and front lamp unit.
FIG. 7 is a plan view of the front cover and front lamp unit.
FIG. 8 is a left side view of a base cover and the front lamp unit.
FIG. 9 is a front view of the base cover and front lamp unit.
FIG. 10 is a plan view of the base cover and front lamp unit.
FIG. 11 is a left side view of a separate cover.
FIG. 12 is a front view of the separate cover.
FIG. 13 is a plan view of the separate cover.
FIG. 14 is a front view of a left portion of the front cover and front lamp unit.
FIG. 15 is a sectional view taken along line XV-XV shown in FIG. 14.
FIG. 16 is a sectional view taken along line XVI-XVI shown in FIG. 14.
FIG. 17 is a sectional view taken along line XVII-XVII shown in FIG. 14.

### DETAILED DESCRIPTION OF THE PREFERRED EMBODIMENTS

Front-rear, up-down, and right-left directions mentioned in the following description are based on a basic posture equivalent to a state in which a saddle type vehicle 1 is traveling straight on a horizontal plane (a state in which a steering handle 7 is in a straight-traveling position) and based on the point of view of a driver when the driver faces forwardly. The right-left direction is equivalent to a vehicle width direction. "The center WO in the width direction" is equivalent to "a vertical plane that passes through the center line of a head tube 3 and that is perpendicular to the rotational axis of a rear wheel Wr." The saddle type vehicle 1 that is in the basic posture will be hereinafter described unless specific notice is given.

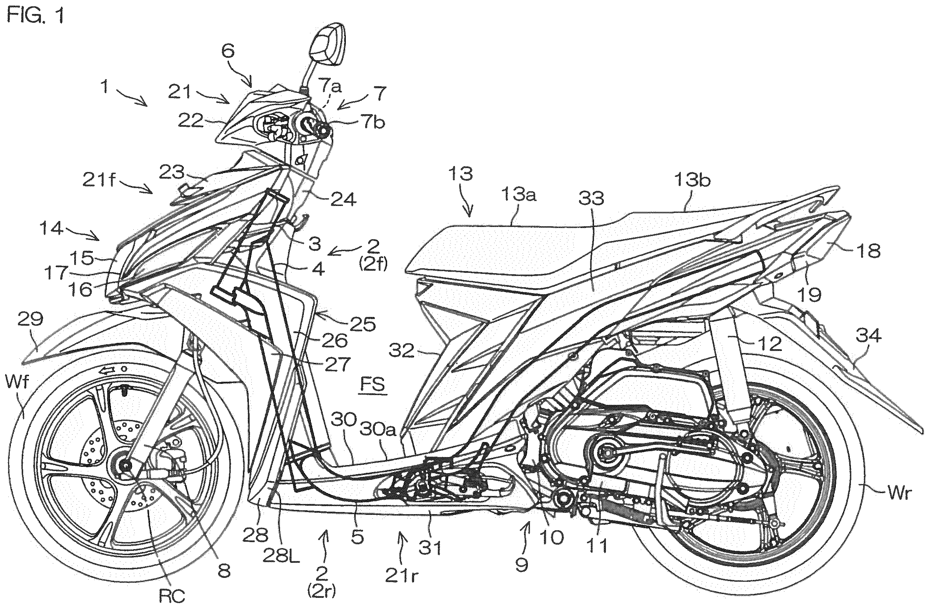

As shown in FIG. 1, the saddle type vehicle 1 includes a frame 2. In FIG. 1, to facilitate understanding, the frame 2 is shown by a thick solid line. The frame 2 includes a front frame 2f and a rear frame 2r disposed behind the front frame 2f. The front frame 2f includes a head tube 3 that extends rearward and upwardly, and a main frame 4 that extends rearward and downwardly from the head tube 3. The rear frame 2r includes a left-and-right pair of seat frames 5 that extend rearward and upwardly from the main frame 4. The pair of seat frames 5 are disposed on the right side and on the left side of the vehicle center WO, respectively.

As shown in FIG. 1, the saddle type vehicle 1 includes a steering device 6 supported by the frame 2, and a front wheel Wf rotatably supported by the steering device 6. The steering device 6 includes a steering handle 7 that is operated by a driver, and a front fork 8 that rotatably supports the front wheel Wf. The steering handle 7 includes a handle bar 7a disposed higher than the head tube 3, and two grips 7 attached to a right end portion and left end portion of the handle bar 7a, respectively. The steering handle 7 and the front fork 8 are supported by the head tube 3. The handle 7 and the front fork 8 are turnable about the center line of the head tube 3. When the steering handle 7 is turned, the front wheel Wf is turned rightward and leftward together with the steering handle 7. As a result, the saddle type vehicle 1 is steered.

As shown in FIG. 1, the saddle type vehicle 1 includes a swing unit 9 that generates power by which the saddle type vehicle 1 can travel and a rear wheel Wr rotatably supported by the swing unit 9. The swing unit 9 includes a power source 10 (internal combustion engine or electric motor) and a driving mechanism 11 that transmits the power of the power source 10 to the rear wheel Wr. The swing unit 9 is attached to the frame 2 via a pivot shaft extending in the vehicle width direction, and is swingable in the up-down direction about a pivot axis (center line of the pivot shaft) with respect to the frame 2. An upper end portion of a rear suspension 12 is attached to the frame 2, and a lower end portion of the rear suspension 12 is attached to the rear end portion of the swing unit 9. The rear wheel Wr is rotatably supported by the rear end portion (portion of the driving mechanism 11) of the swing unit 9. The rear wheel Wr is attached to the frame 2 via the pivot shaft and the swing unit 9. The rear wheel Wr is swingable in the up-down direction around the pivot axis together with the swing unit 9 with respect to the frame 2.

As shown in FIG. 1, the saddle type vehicle 1 includes a saddle type seat 13 disposed over the pair of seat frames 5. The seat 13 is disposed behind the head tube 3. The seat 13 is supported by the pair of seat frames 5 via a storage box (not shown) disposed between the pair of seat frames 5. The seat 13 may be for one person or for two persons. FIG. 1 shows an example where a driver seating surface 13a on which a driver sits and a passenger seating surface 13b on which a passenger sits are provided for the seat 13. The seat 13 may be directly supported by the frame 2, or may be supported by the frame 2 via another member other than the storage box.

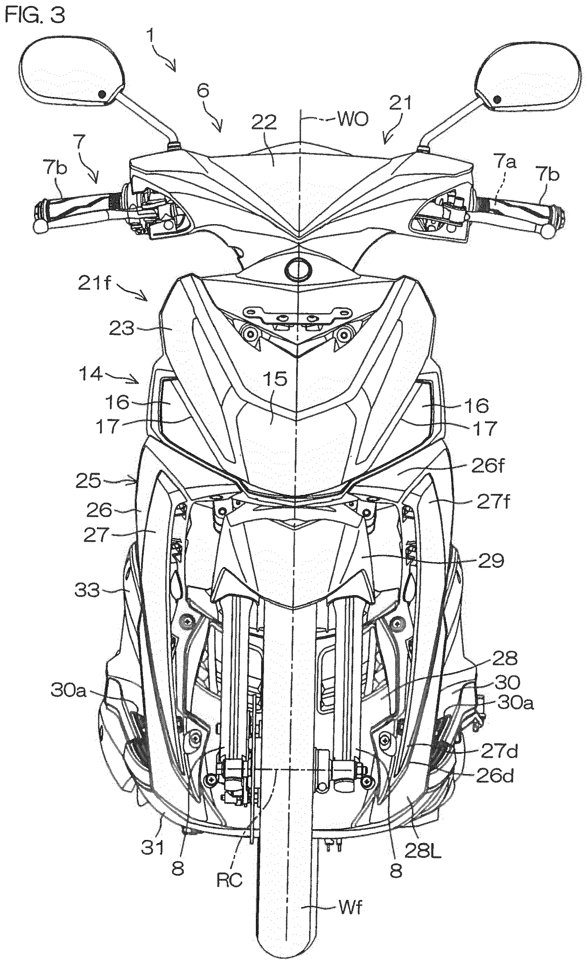

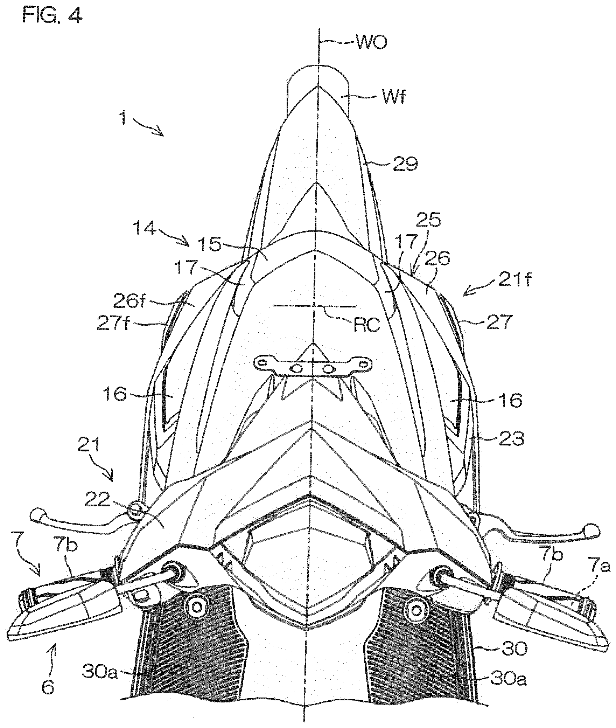

As shown in FIGS. 3 and 4, the saddle type vehicle 1 includes a head lamp 15 that overlaps with the vehicle center WO, two second side lamps (position lamps) 17 disposed on the right side and on the left side of the head lamp 15, respectively, and two first side lamps (flasher lamps) 16 disposed on the right side and on the left side of the two second side lamps 17, respectively. The head lamp 15, the first side lamps 16, and the second side lamps 17 are disposed higher than the front wheel Wf. As shown in FIG. 1, the saddle type vehicle 1 further includes a tail lamp 18 that overlaps with the vehicle center WO, and two rear flashers 19 disposed on the right side and on the left side of the tail lamp 18, respectively. The tail lamp 18 and the rear flashers 19 are disposed higher than the rear wheel Wr.

As shown in FIG. 1, the saddle type vehicle 1 includes an exterior cover 21 with which the frame 2 is covered. The exterior cover 21 includes a handle cover 22 with which the steering handle 7 is covered, a front fender 29 disposed over the front wheel Wf, a front frame cover 21f with which the front frame 2f is covered, a rear frame cover 21r with which the rear frame 2r is covered, and a rear fender 34 disposed over and behind the rear wheel Wr. The front fender 29 is connected to the front fork 8, and the front frame cover 21f, the rear frame cover 21 r, and the rear fender 34 are connected to the frame 2.

As shown in FIG. 1, the rear frame cover 21r includes a foot board 30 that extends rearward from the front frame cover 21f (specifically, a back cover 24 described below), an undercover 31 disposed under the foot board 30 and the seat frames 5, an under panel 32 that extends upwardly from the foot board 30 toward the seat 13, and a rear cover 33 disposed on the right side and on the left side of the pair of seat frames 5. The back cover 24 and the under panel 32 are spaced apart in the front-rear direction. The exterior cover 21 defines a foot space FS, in which the driver's feet and legs are disposed, between the back cover 24 and the under panel 32. As shown in FIG. 4, the foot board 30 includes a left-and-right pair of footrest portions 30a on which the feet of the driver sitting on the seat 13 are placed.

As shown in FIG. 1, the front frame cover 21f includes a front cover 23 disposed in front of the head tube 3, a back cover 24 disposed behind the head tube 3, two side covers 25 disposed on the right side and on the left side of the front frame 2f, respectively, and an inner cover 28 disposed between the front wheel Wf and the back cover 24 in the front-rear direction (refer also to FIG. 3). The side covers 25 include two first covers 26 disposed on the right side and on the left side of the front frame 2f, respectively, and two second covers 27 disposed outside in the vehicle width direction of the two first covers 26.

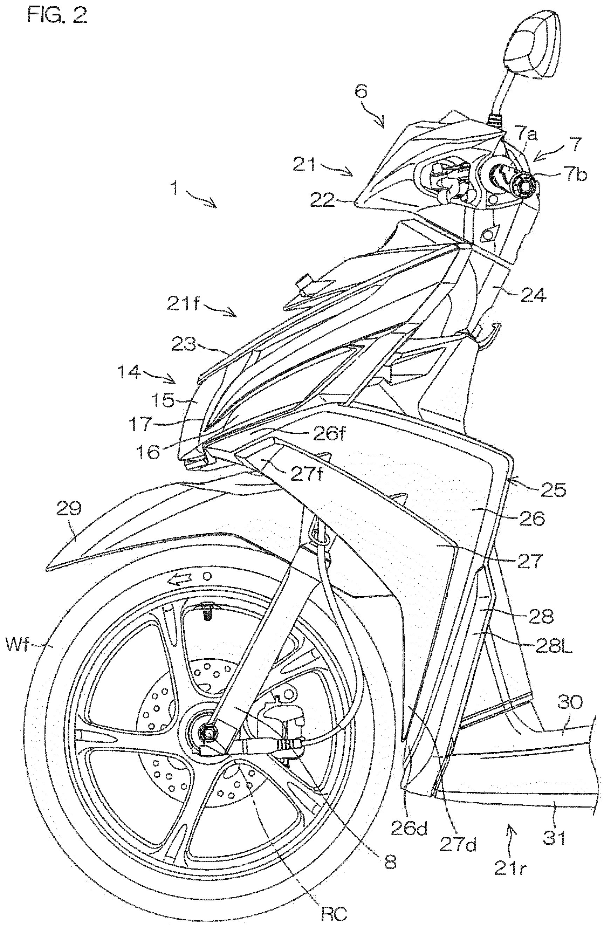

As shown in FIG. 2, the front cover 23, the back cover 24, and the inner cover 28 are disposed between the two side covers 25. The front cover 23 is disposed over the front fender 29. The front cover 23 is disposed in front of the back cover 24. The back cover 24 extends upwardly from the foot board 30 to the handle cover 22. A side end portion 28L (right end portion or left end portion) of the inner cover 28 is disposed between the side cover 25 and the back cover 24 in a side view.

As shown in FIG. 2, the first cover 26 of the side cover 25 is partially covered with the second cover 27 in a side view. The first cover 26 and the second cover 27 both extend from over the front wheel Wf to behind the front wheel Wf, passing over and behind the front wheel Wf in a side view. A front end portion 26f of the first cover 26 is disposed over the front wheel Wf, and a lower end portion 26d of the first cover 26 is disposed behind the front wheel Wf. A front end portion 27f of the second cover 27 is disposed over the front wheel Wf, and a lower end portion 27d of the second cover 27 is disposed behind the front wheel Wf. As shown in FIG. 3, the first cover 26 and the second cover 27 are both disposed further on the outer side in the vehicle width direction than the front wheel Wf.

As shown in FIG. 2, the first cover 26 of the side cover 25 extends rearward and downwardly from the front cover 23 in a side view. The front end portion 26f of the first cover 26 is disposed outside in the vehicle width direction of the front cover 23, and overlaps with the front cover 23 in a side view. The front end portion 26f of the first cover 26 is disposed under the first side lamp 16 in a side view. Similarly, the front end portion 27f of the second cover 27 is disposed under the first side lamp 16 in a side view. The front end portion 27f of the second cover 27 is disposed outside in the vehicle width direction of the front end portion 26f of the first cover 26, and overlaps with the front end portion 26f of the first cover 26 in a side view.

Next, the lamps 15 to 17 and the front cover 23 will be described in detail.

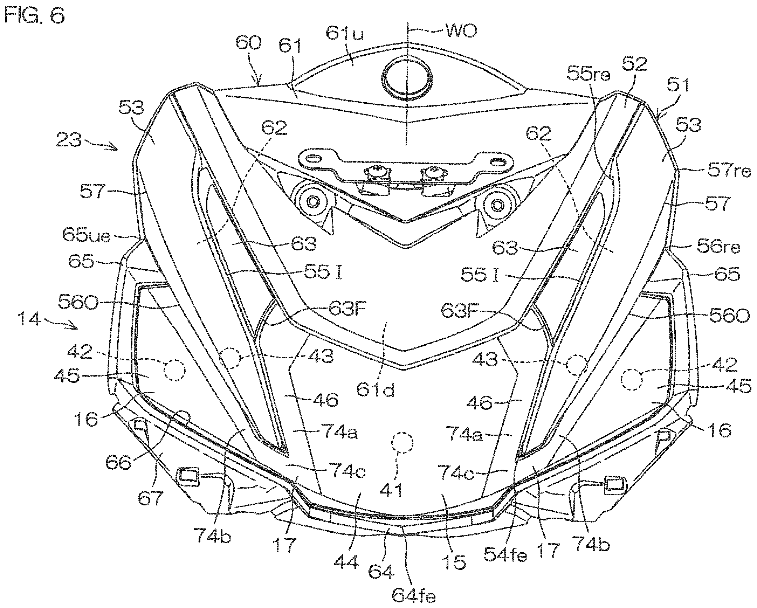

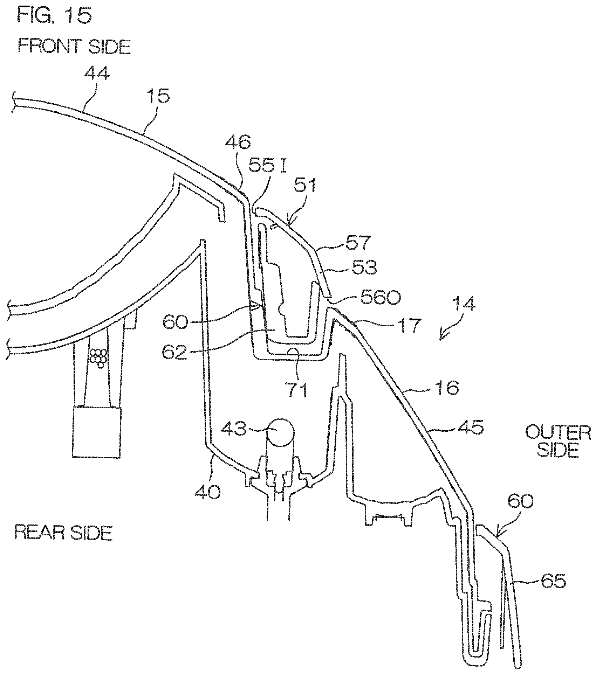

As shown in FIG. 6, the saddle type vehicle 1 includes a front lamp unit 14 for which the head lamp 15, the first side lamps 16, and the second side lamps 17 are integral. That is, the head lamp 15, the first side lamps 16, and the second side lamps 17 are integrated. The front lamp unit 14 includes a plurality of light sources 41 to 43, a holder 40 (refer to FIG. 15) that holds the plurality of light sources, and clear covers 44 to 46 disposed in front of the plurality of light sources.

Specifically, the head lamp 15 includes the head lamp light source 41 and the head lamp clear cover 44 disposed in front of the head lamp 41. The first side lamp 16 includes the first side lamp light source 42 and the first side lamp clear cover 45 disposed in front of the first side lamp light source 42. The second side lamp 17 includes the second side lamp light source 43 and the second side lamp clear cover 46 disposed in front of the second side lamp light source 43. The second side lamp light source 43 overlaps with the front cover 23 in any of a front view, a side view, and a plan view, and is covered with the front cover 23. A portion of the second side lamp clear cover 46 is exposed from the front cover 23. The second side lamp clear cover 46 is integral with the head lamp clear cover 44 and the first side lamp clear cover 45.

As shown in FIG. 6, the head lamp light source 41 is disposed at a position to overlap with the vehicle center WO. The second side lamp light source 43 is disposed further on the outer side in the vehicle width direction than the head lamp light source 41. The first side lamp light source 42 is disposed further on the outer side in the vehicle width direction than the second side lamp light source 43. The second side lamp light source 43 and the first side lamp light source 42 are disposed higher than the head lamp light source 41. The head lamp light source 41, the first side lamp light sources 42, the second side lamp light sources 43 are all electric lamps. The electric lamps may be halogen lamps, may be LED (light emitting diode) lamps, or may be lamps other than halogen lamps and LED lamps.

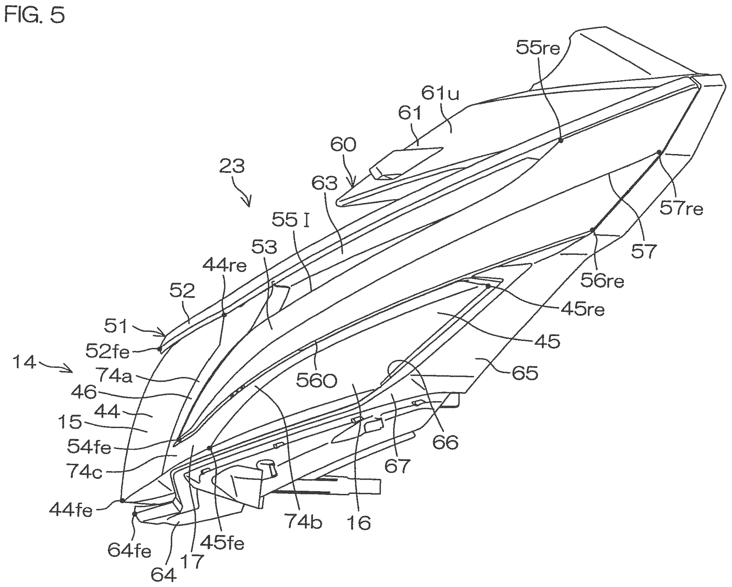

As shown in FIG. 5, a front end 44fe of the head lamp clear cover 44 that is equivalent to the front end of the head lamp 15 is disposed further to the front than a front end 45fe of the first side lamp clear cover 45. A rear end 44re of the head lamp clear cover 44 is disposed at a position that is further to the rear than the front end 45fe of the first side lamp clear cover 45 and that is further to the front than the rear end 45re of the first side lamp clear cover 45. The front end 44fe of the head lamp clear cover 44 is disposed lower than the rear end 44re of the head lamp clear cover 44, the front end 45fe of the first side lamp clear cover 45, and the rear end 45re of the first side lamp clear cover 45. The front end 45fe of the first side lamp clear cover 45 is disposed lower than the rear end 45re of the first side lamp clear cover 45. The rear end 44re of the head lamp clear cover 44 is disposed at a height between the front end 45fe of the first side lamp clear cover 45 and the rear end 45re of the first side lamp clear cover 45.

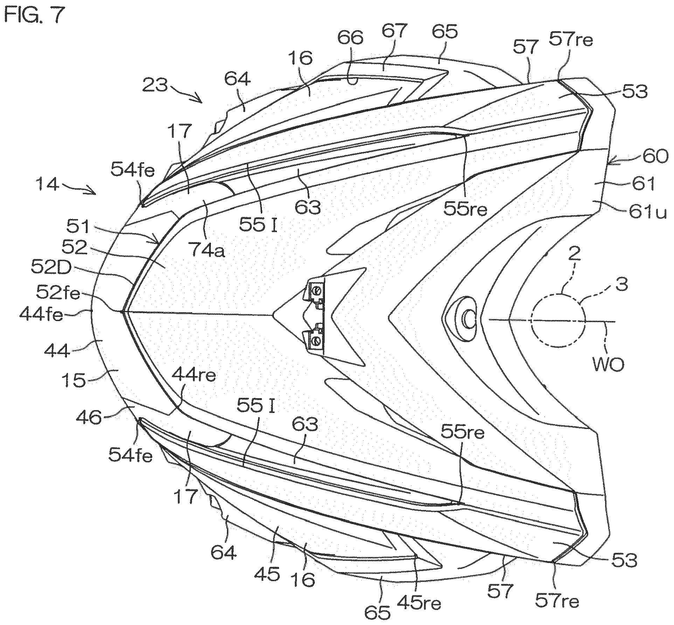

As shown in FIG. 7, the front cover 23 includes a base cover 60 disposed in front of the head tube 3 and a separate cover 51 disposed on an outer surface of the base cover 60. The separate cover 51 is a member that is independent of the base cover 60. The separate cover 51 is attached to the base cover 60. The base cover 60 is attached to the front frame 2f. The separate cover 51 covers the base cover 60 in any of a front view, a side view, and a plan view. In other words, the separate cover 51 overlaps with the base cover 60 in any of a front view, a side view, and a plan view. The separate cover 51 is disposed over the front lamp unit 14 in a front view.

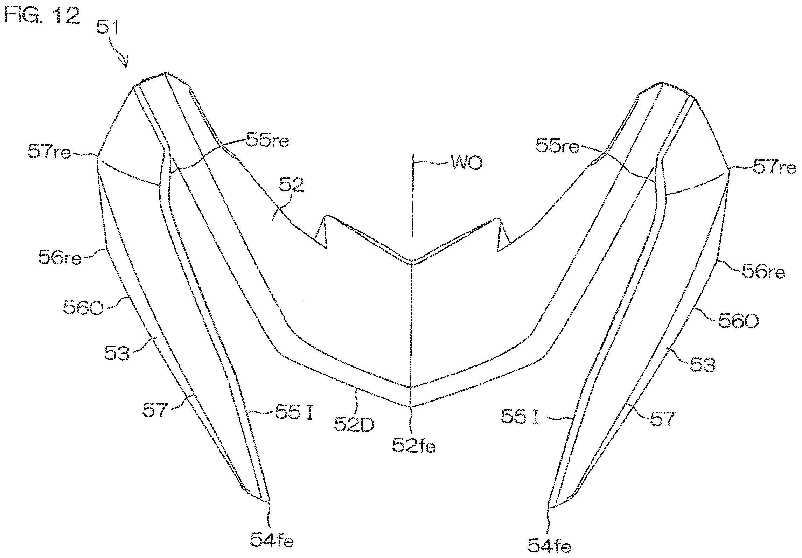

As shown in FIG. 12, the separate cover 51 includes two partition cover portions 53 disposed so as to sandwich the head lamp 15 in the vehicle width direction and an upper cover portion 52 disposed between the two partition cover portions 53 in a front view. The partition cover portion 53 extends downwardly toward the vehicle center WO in a front view. The upper cover portion 52 connects upper end portions of the two partition covers 53 to each other. A front end 54fe of the partition cover portion 53 that is equivalent to the lower end of the partition cover portion 53 is disposed lower than the upper cover portion 52. The partition cover portion 53 is cantilever portion. That is, the front end 54fe of the partition cover portion 53 is not connected to any portion of the separate cover 51 and the base cover 60. A rear end portion (upper end portion) of the partition cover portion 53 is connected to the upper cover portion 52.

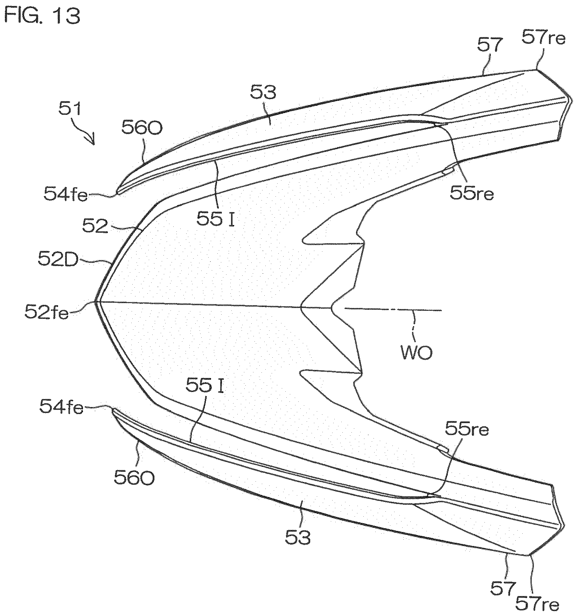

As shown in FIG. 12 and FIG. 13, an inner edge 55I and an outer edge 560 of the partition cover portion 53 extend upwardly from the front end 54fe of the partition cover portion 53 in a front view. The inner edge 55I of the partition cover portion 53 is disposed further on the inner side in the vehicle width direction than the outer edge 560 of the partition cover portion 53 in a front view. The outer edge 560 is disposed further on the outer side in the vehicle width direction than the inner edge 55I of the partition cover portion 53 in a front view.

A rear end 55re of the inner edge 55I of the partition cover portion 53 is disposed further on the outer side in the vehicle width direction than the front end 54fe of the partition cover portion 53. A rear end 56re of the outer edge 560 of the partition cover portion 53 is disposed further on the outer side in the vehicle width direction than the rear end 55re of the inner edge 551 of the partition cover portion 53. A rear end 56re of the outer edge 560 of the partition cover portion 53 is disposed lower than the rear end 55re of the inner edge 551 of the partition cover portion 53.

The rear end 55re of the inner edge 551 of the partition cover portion 53 is connected to a lower edge 52 of the upper cover portion 52. The inner edge 551 of the partition cover portion 53 is separated downwardly from the lower end 52D of the upper cover portion 52, except the rear end 55re of the inner edge 551 of the partition cover portion 53. The inner edge 551 of the partition cover portion 53 and the lower end 52D of the upper cover portion 52 define a slit that extends upwardly in a direction to separate from the vehicle center WO toward the rear end 55re of the inner edge 551 of the partition cover portion 53.

The rear ends 55re and 56re are end portions at the rear of the inner edge 551 and the outer edge 560 of the slender partition cover portion 53. In other words, the rear ends 55re and 56re correspond to the rear ends of a portion where bending deformation (flexure) occurs when a bending stress occurs in the partition cover portion 53. The inner edge 551 includes a front portion that is located under the head lamp clear cover 44 in a side view, and a rear portion that extends rearward from the front portion to the rear end 55re. The outer edge 560 includes a front portion that is located over the first side lamp clear cover 45 in a side view and a rear portion that extends rearward from the front portion to the rear end 56re. The rear end 56re of the outer edge 560 is disposed further to the rear than the first side lamp clear cover 45 in a side view, and faces in a direction opposite to the first side lamp clear cover 45, i.e., the rear direction.

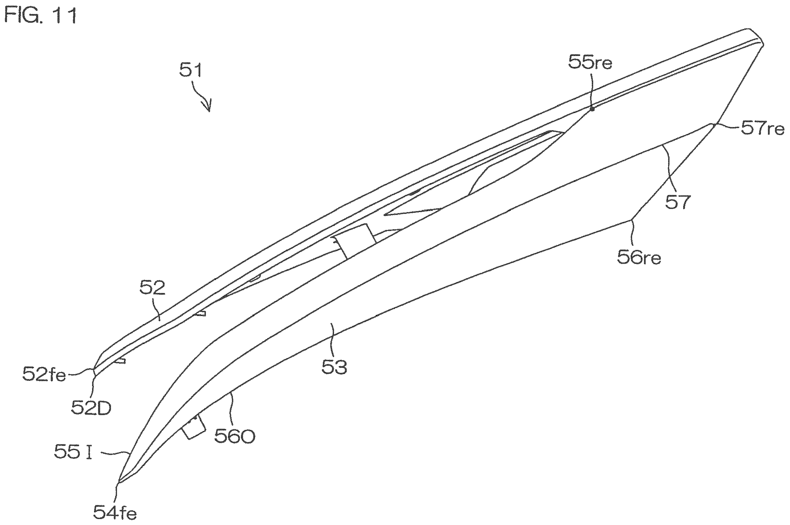

As shown in FIG. 11, the inner edge 55I and the outer edge 560 of the partition cover portion 53 extend rearward and upwardly from the front end 54fe of the partition cover portion 53 in a side view. The front end 54fe of the partition cover portion 53 is disposed lower than the rear end 55re of the inner edge 55I of the partition cover portion 53 and the rear end 56re of the outer edge 560 of the partition cover portion 53. The rear end 56re of the outer edge 560 of the partition cover portion 53 is disposed further to the rear than the rear end 55re of the inner edge 55I of the partition cover portion 53. The partition cover portion 53 is disposed under the upper cover portion 52 in a side view. The front end 54fe of the partition cover portion 53 is disposed further to the rear than the front end 52fe of the upper cover portion 52.

The partition cover portion 53 includes an outwardly projecting outer surface showing a chevron shape in section (refer to FIG. 15). As shown in FIG. 11, a ridge line 57 of the outer surface of the partition cover portion 53, that is, a line passing through the vertex of the outer surface of the partition cover portion 53 extends rearward and upwardly from the front end 54fe of the partition cover portion 53. The ridge line 57 of the partition cover portion 53 is located between the inner edge 551 and the outer edge 560 of the partition cover portion 53 in the up-down direction in a side view. Because of such a sectional shape, as compared with when the inner edge 551 and the outer edge 560 are linearly connected, the bending strength of the partition cover portion 53 is improved.

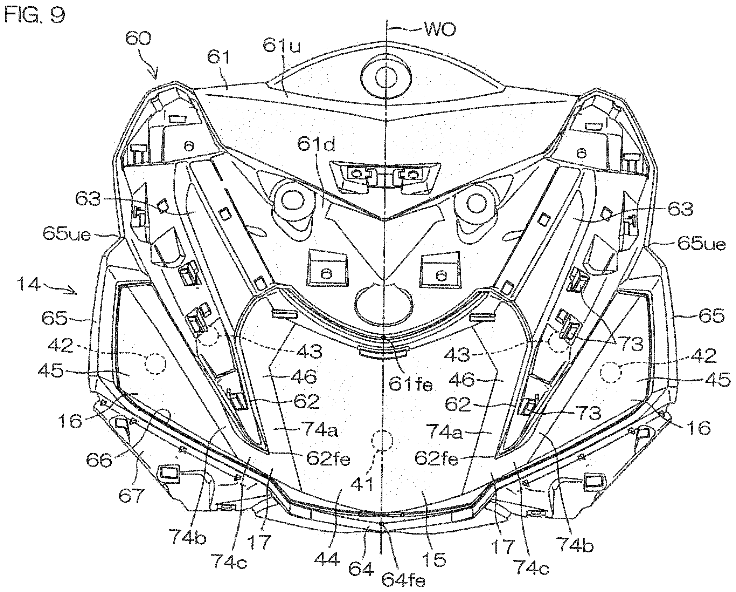

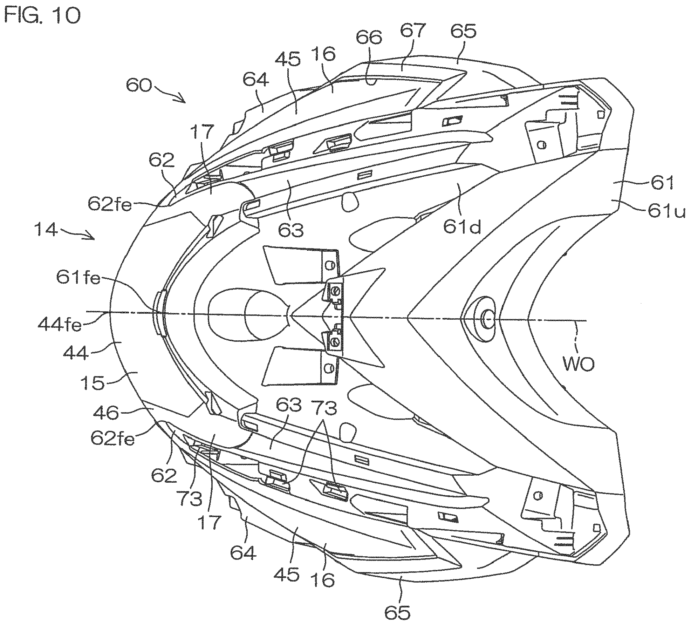

As shown in FIG. 9 and FIG. 10, the base cover 60 includes two base fastening portions 62 disposed so as to sandwich the head lamp 15 in the vehicle width direction, a base upper portion 61 disposed between the two base fastening portions 62 in a front view, two groove portions 63 disposed between the two base fastening portions 62 and the base upper portion 61 in the vehicle width direction in a front view, a base lower portion 64 disposed under the two base fastening portions 62 and the base upper portion 61 in a front view, and two base side portions 65 that extend upwardly from the right end portion and left end portion of the base lower portion 64 to the two base fastening portions 62 in a front view.

As shown in FIG. 9, the base fastening portion 62 and the base lower portion 64 are separated from each other in the up-down direction. Similarly, the base upper portion 61 and the base lower portion 64 are separated from each other in the up-down direction. A front end 62fe of the base fastening portion 62 that is equivalent to the lower end of the base fastening portion 62 is disposed lower than the base upper portion 61. An upper end 65ue of the base side portion 65 is disposed higher than the front end 62fe of the base fastening portion 62. The upper end 65ue of the base side portion 65 is connected to the base fastening portion 62. The base side portion 65 is disposed further on the outer side in the vehicle width direction than the base fastening portion 62. The two groove portions 63 are disposed between the two base fastening portions 62. The base upper portion 61 is disposed between the two groove portions 63. The groove portion 63 connects the base fastening portion 62 and the base upper portion 61 to each other. The groove portion 63 is recessed further to the rear than the base fastening portion 62 and the base upper portion 61.

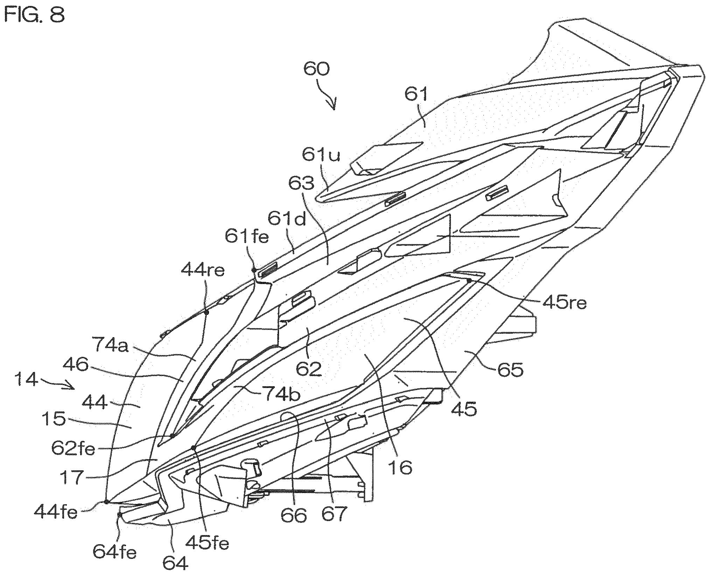

As shown in FIG. 8, the base upper portion 61 includes a lower portion 61d disposed over the base fastening portion 62 in a side view and an upper portion 61 u disposed higher than the lower portion 61 d of the base upper portion 61 in a side view. A front end 61fe of the base upper portion 61 (front end of the lower portion 61 d of the base upper portion 61) is disposed further to the rear than a front end 64fe of the base lower portion 64. The front end 62fe of the base fastening portion 62 is disposed at a position that is further to the rear than the front end 64fe of the base lower portion 64 and that is further to the front than the front end 61fe of the base upper portion 61. Further, the front end 62fe of the base fastening portion 62 is disposed at a height between the front end 64fe of the base lower portion 64 and the front end 61fe of the base upper portion 61. The base side portion 65 is disposed behind the base fastening portion 62 in a side view.

As shown in FIG. 9, the base cover 60 includes an open portion 67 that defines an opening 66 in which the front lamp unit 14 is disposed. The open portion 67 includes the two base fastening portions 62, the base upper portion 61, the base lower portion 64, and the two base side portions 65. In other words, the base fastening portions 62 etc., define the opening 66 to expose the front lamp unit 14. The head lamp 15 is disposed between the base upper portion 61 and the base lower portion 64 in a front view. The first side lamp 16 is disposed between the base fastening portion 62 and the base side portion 65 in a front view. The second side lamp light source 43 overlaps with the base fastening portion 62 in a front view, and is covered with the base fastening portion 62. A portion of the second side lamp clear cover 46 (a first lighting portion 74a, a second lighting portion 74b, and a connecting lighting portion 74c described below) is exposed from the base fastening portion 62.

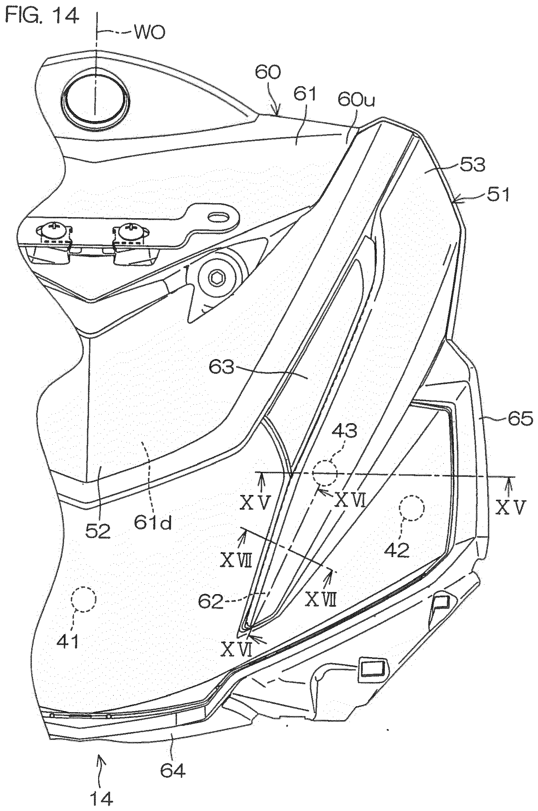

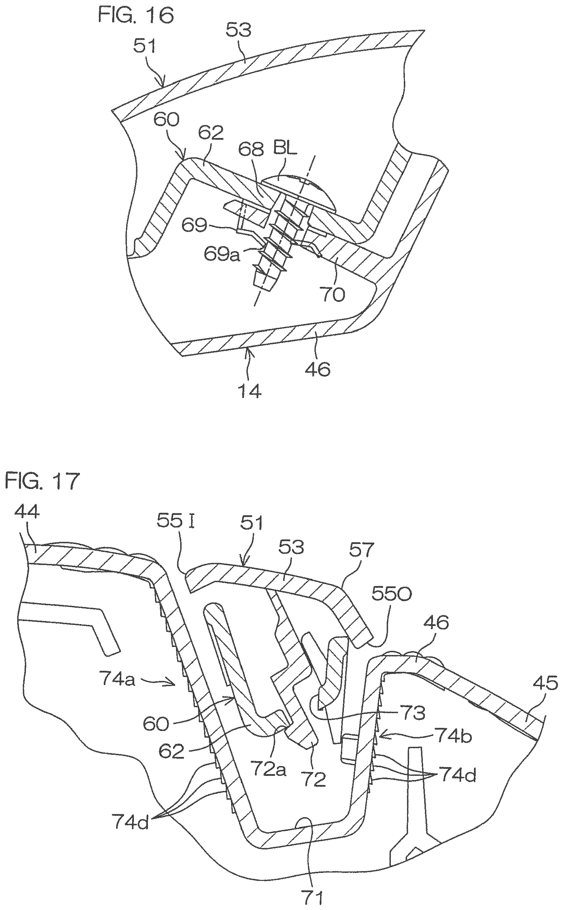

FIG. 16 shows a section taken along line XVI-XVI shown in FIG. 14. As shown in FIG. 16, a fixing portion 68 provided in the base fastening portion 62 of the base cover 60 is, via a U-shaped fixing member 69 in which a screw hole 69a is provided, overlapped with a fixing portion 70 that is integral with the second side lamp clear cover 46. A shaft portion of a bolt BL as an example of a fastening member penetrates through the fixing portion 68, the fixing member 69, and the fixing portion 70 in the axial direction of the bolt BL. A head portion of the bolt BL is disposed over the base fastening portion 62. The screw hole 69a of the fixing member 69 is disposed under the fixing portion 70 of the front lamp unit 14. The fixing portion 70 of the front lamp unit 14 is fastened to the base cover 60 by the bolt BL and the fixing member 69. The partition cover portion 53 is disposed over the head portion of the bolt BL. The bolt BL is covered with the partition cover portion 53 in any of a front view, a side view, and a plan view. Because the bolt BL is thus hidden by the partition cover portion 53, spoiling the external appearance of the saddle type vehicle 1 by the bolt BL can be avoided.

FIG. 17 shows a section taken along line XVII-XVII shown in FIG. 14. As shown in FIG. 17, the base fastening portion 62 of the base cover 60 is housed in a recess portion 71 provided in the second side lamp clear cover 46. The partition cover portion 53 of the separate cover 51 is disposed over the base fastening portion 62. The separate cover 51 includes a hook (projection portion) 72 that extends from an inner surface of the partition cover portion 53 toward the base fastening portion 62. The hook 72 is fitted in a fitting hole 73 provided in the base fastening portion 62. The hook 72 includes a step portion 72a showing an L-shape in section. The step portion 72a of the hook 72 is hooked on a lower surface of the base fastening portion 62. A movement of the partition cover portion 53 relative to the base fastening portion 62 is restrained by the hook 72.

A lock mechanism including the hook 72 and the fitting hole 73 is disposed in the vicinity of the front end 62fe of the base fastening portion 62 (on the line XVII-XVII shown in FIG. 14), and a movement of the front end 62f is thereby restrained. Such lock mechanisms are provided in plural numbers at an interval in the length direction of the base fastening portion 62, besides the vicinity of the front end 62fe (refer to FIG. 9 and FIG. 10). The partition cover portion 53 of the separate cover 51 is thereby attached to the base cover 60. In addition, in order to sufficiently restrain a movement of the front end 62fe, the hook 72 and the fitting hole 73 are desirably provided in the vicinity of the front end 62fe. For example, providing the lock mechanism at a position closer to the front end 62fe than half of the overall length of the partition cover portion 53 has an effect on restraining a movement of the front end 62fe.

As shown in FIG. 6, the partition cover portion 53 of the separate cover 51 is disposed on the base fastening portion 62 of the base cover 60. The partition cover portion 53 covers the base fastening portion 62 in any of a front view, a side view, and a plan view. Similarly, the upper cover portion 52 of the separate cover 51 is disposed on the lower portion 61 d of the base upper portion 61. The upper cover portion 52 covers a portion of the base upper portion 61 in any of a front view, a side view, and a plan view.

On the other hand, the base cover 60 includes the two groove portions (exposed portions) 63 that extend along the inner edges 55I of the respective partition cover portions 53, and are externally exposed inside in the vehicle width direction of the partition cover portions 53. That is, the groove portions 63 extend rearward and upwardly, between the upper cover portion 52 and the right partition cover portion 53 or between the upper cover portion 52 and the left partition cover portion 53, toward the outer sides in the vehicle width direction, respectively. As shown in FIG. 6, a front edge 63F of the groove portion 63 is disposed at a position that is further on the outer side in the vehicle width direction than the front end 54fe of the partition cover portion 53 and that is further on the inner side in the vehicle width direction than the rear end 55re of the inner edge 55I of the partition cover portion 53.

As shown in FIG. 6, the upper cover portion 52 of the separate cover 51 is located over the head lamp 15 in a front view. The front end 54fe of the partition cover portion 53 is disposed between the head lamp 15 and the first side lamp 16. The partition cover portion 53, in a front view, extends upwardly in a direction to separate from the vehicle center WO from a position between the head lamp 15 and the first side lamp 16. The rear end 55re of the inner edge 55I of the partition cover portion 53 is disposed over the first side lamp 16 in a front view.

As shown in FIG. 5, the inner edge 55I of the partition cover portion 53 extends, from the front end 54fe of the partition cover portion 53, further to the rear than both of the rear end 44re of the head lamp clear cover 44 and the rear end 45re of the first side lamp clear cover 45. Similarly, the outer edge 560 of the partition cover portion 53 extends, from the 2472-EPC / EP97234 front end 54fe of the partition cover portion 53, further to the rear than both of the rear end 44re of the head lamp clear cover 44 and the rear end 45re of the first side lamp clear cover 45. The rear end 55re of the inner edge 551 of the partition cover portion 53 and the rear end 56re of the outer edge 560 of the partition cover portion 53 are both disposed higher than the front lamp unit 14.

As shown in FIG. 6, a portion (connecting lighting portion 74c) of the second side lamp 17 is interposed between the front end 62fe of the base fastening portion 62 and the base lower portion 64. The second side lamp 17 includes a lighting body that diffuses and transmits light of the second side lamp light source 43. The lighting body includes the first lighting portion 74a that extends along the partition cover portion 53 between the head lamp 15 and the partition cover portion 53, the second lighting portion 74b that extends along the partition cover portion 53 between the first side lamp 16 and the partition cover portion 53, and the connecting lighting portion 74c that connects the first lighting portion 74a and the second lighting portion 74b at a position lower than the partition cover portion 53.

As shown in FIG. 17, each of the first lighting portion 74a, the second lighting portion 74b, and the connecting lighting portion 74c includes a plurality of projections 74d projecting from an inner surface of the second side lamp clear cover 46. Light of the second side lamp light source 43 is transmitted through the lighting body and is diffused by the lighting body due to reflection. The light of the second side lamp light source 43 is thereby spread over a wide range of the lighting body (the first lighting portion 74a, the second lighting portion 74b, and the connecting lighting portion 74c), and the lighting body is illuminated with the single light source (the second side lamp light source 43). Thereby, the first lighting portion 74a and the second lighting portion 74b partitioned off by the partition cover portion 53 can be turned on with a small number of light sources.

As above, in the present preferred embodiment, because the partition cover portion 53 of the separate cover 51 separates the head lamp 15 and the first side lamp 16, the visibility of the head lamp 15 and the first side lamp 16 can be improved.

Also, the rear ends of both of the inner edge 55I and the outer edge 560 of the partition cover portion 53 are located further to the rear than the rear end 44re of the head lamp clear cover 44 and the rear end 45re of the first side lamp clear cover 45. In other words, the partition cover portion 53 has secured no less than a length necessary for separating the head lamp 15 and the first side lamp 16, and the partition cover portion 53 is thus long.

Because the partition cover portion 53 is long, the partition cover portion 53 easily flexes. Thus, even if external force is applied to the partition cover portion 53, the external force can be dispersed or absorbed by flexure (elastic deformation) of the partition cover portion 53. A bending strength necessary for the partition cover portion 53 is thereby easily secured. Therefore, the partition cover portion 53 to separate the head lamp clear cover 44 and the first side lamp clear cover 45 can be narrowed, so that the exposed area of the head lamp clear cover 44 and the first side lamp clear cover 45 can be increased. Thereby, the visibility of the head lamp 15 and the first side lamp 16 can be further improved.

Accordingly, the compactness of the vehicle and the strength of the partition cover portion 53 can be maintained, while the visibility of the head lamp 15 and the first side lamp 16 disposed in the front portion of the vehicle can be improved.

Also, in the present preferred embodiment, the hook 72 that projects in the overlapping direction of the partition cover portion 53 and the base fastening portion 62 is formed on the partition cover portion 53, and the fitting hole 73 into which the hook portion 72 is inserted to restrain a relative movement of the partition cover portion 53 and the base fastening portion 62 is formed in the base fastening portion 62. Thereby, the partition cover portion 53 is attached to the base fastening portion 62 with a simple arrangement including the hook 72 and the fitting hole 73. In other words, there is no need to provide a complicated arrangement to attach the partition cover portion 53 to the base fastening portion 62, and thus a space to dispose the head lamp clear cover 44 and the first side lamp clear cover 45 is not limited by the above complicated arrangement. Thus, the visibility of the head lamp 15 and the first side lamp 16 can be further improved.

Also, as a result of the hook 72 being provided in the vicinity of the front end 53fe of the partition cover portion 53, a movement of the front end 53fe that is equivalent to a free end of the partition cover portion 53 is restrained, so that the strength against vibration of the partition cover portion 53 can be sufficiently improved. Also, because lock mechanisms each consisting of the hook 72 and the fitting hole 73 are provided in plural numbers along the length direction of the partition cover portion 53, the strength against vibration can be improved across the entire region in the length direction of the partition cover portion 53.

Also, in the present preferred embodiment, the inner edge 55I and the outer edge 560 of the partition cover portion 53 are shifted outward with respect to the front end 54fe of the partition cover portion 53. Thus, as compared with when the inner edge 55I and the outer edge 560 of the partition cover portion 53 extend rearward at the same position as that of the front end 54fe of the partition cover portion 53 in the vehicle width direction, the partition cover portion 53 can be lengthened. Thereby, the length of the partition cover portion 53 in the front-rear direction can be kept down, while the overall length of the partition cover portion 53 can be increased. Accordingly, the separate cover 51 provided with the partition cover portion 53 can be made compact in the front-rear direction, while the strength of the partition cover portion 53 can be improved.

Also, in the present preferred embodiment, both of the head lamp 15 and the first side lamp 16 are supported by the base cover 60. Thus, a lamp support portion to support at least one of the head lamp 15 and the first side lamp 16 is not necessarily provided for the separate cover 51. Therefore, a restriction in the shape of the partition cover portion 53 by a lamp support portion can be avoided, and the degree of freedom in the shape of the partition cover portion 53 can be increased. Thereby, for example, by further narrowing a front end portion of the partition cover portion 53, the exposed area of the head lamp clear cover 44 and the first side lamp clear cover 45 can be increased. Thus, the visibility of the head lamp 15 and the first side lamp 16 can be enhanced.

Also, in the present preferred embodiment, the exposed portion of the base cover 60, i.e., the groove portion 63 of the base cover 60 extends along the inner edge 55I of the partition cover portion 53. Thus, the inner edge 55I of the partition cover portion 53 is emphasized. Thereby, the head lamp clear cover 44 and the first side lamp clear cover 45 can be more clearly separated by the partition cover portion 53. Further, because the groove portion 63 of the base cover 60 is disposed along the inner edge 55I of the partition cover portion 53, there is a space along the inner edge 55I of the partition cover portion 53. Therefore, when an upward external force is applied to the partition cover portion 53, a movement of the partition cover portion 53 due to flexure is unlikely to be restricted. Thus, the partition cover portion 53 can disperse or absorb the external force by flexure (elastic deformation). A necessary strength can thereby be secured in the partition cover portion 53.

Also, in the present preferred embodiment, because, in a side view, the front end 44fe of the head lamp clear cover 44 is shifted forward with respect to the front end 45fe of the first side lamp clear cover 45, the visibility of the front end of the head lamp 15 when the saddle type vehicle 1 is viewed from its lateral side is improved. Similarly, because, in a side view, the rear end 45re of the first side lamp clear cover 45 is shifted rearward with respect to the rear end 44re of the head lamp clear cover 44, the visibility of the rear end of the first side lamp 16 when the saddle type vehicle 1 is viewed from its lateral side is improved. Thereby, the visibility of the head lamp 15 and the first side lamp 16 can be further improved.

Also, in the present preferred embodiment, the second side lamp 17 is disposed between the head lamp 15 and the first side lamp 16. The inner edge 55I and the outer edge 560 of the partition cover portion 53 to separate the head lamp 15 and the first side lamp 16 are illuminated with the second side lamp 17. Therefore, the partition cover portion 53 is further distinct. Thereby, the visibility of the head lamp 15 and the first side lamp 16 can be further improved.

Also, in the present preferred embodiment, the two first side lamps 16 are disposed on the right side and on the left side of the head lamp 15, respectively. The right first side lamp 16 and the head lamp 15 are separated by the right partition cover portion 53, and the left first side lamp 16 and the head lamp 15 are separated by the left partition cover portion 53. Thereby, the visibility of both the first side lamps 16 can be improved.

Although preferred embodiments have been described above, various modifications of said embodiments are possible.

For example, a description has been given of an example in which the head lamp 15, the first side lamps 16, and the second side lamps 17 are integrated. However, the head lamp 15, the first side lamps 16, and the second side lamps 17 may be separated, or only two types of the head lamp 15, the first side lamps 16, and the second side lamps 17 may be integrated.

A description has been given of an example in which the second side lamp light source 43 of the second side lamp 17 is covered with the partition cover portion 53 of the front cover 23 in any of a front view, a side view, and a plan view. However, the second side lamp light source 43 may be exposed from the front cover 23 in at least one of a front view, a side view, and a plan view.

A description has been given of an example in which the rear ends of both of the inner edge 55I and the outer edge 560 of the partition cover portion 53 are located further to the rear than the rear end 44re of the head lamp clear cover 44 and the rear end 45re of the first side lamp clear cover 45. However, the rear end 55re of the inner edge 55I of the partition cover portion 53 may be disposed at a position that is further to the rear than the rear end 44re of the head lamp clear cover 44 and that is further to the front than the rear end 45re of the first side lamp clear cover 45. The same applies to the rear end 56re of the outer edge 560 of the partition cover portion 53.

A description has been given of an example in which the saddle type vehicle 1 is a scooter type motorcycle equipped with the swing unit 9, and the power source 10 is swingable with respect to the frame 2. However, the saddle type vehicle 1 may be an underbone type motorcycle in which the power source 10 is fixed to the frame 2.

A description has been given of an example in which the first side lamp 16 is a flasher lamp, and the second side lamp 17 is a position lamp. However, for example, the first side lamp 16 may be a position lamp, and the second side lamp 17 may be a flasher lamp. Also, the second side lamp 17 may be provided not between the head lamp 15 and the first side lamp 16, but in another portion (for example, the handle cover 22). In this case, at least one of the head lamp clear cover 44 and the first side lamp clear cover 45 may be expanded to a position where the second side lamp clear cover needs to be disposed.

A description has been given of an example in which the rear end 45re of the first side lamp clear cover 45 is disposed further to the rear than the rear end 44re of the head lamp clear cover 44. However, the rear end 45re may be provided at the same position in the front-rear direction as that of the rear end 44re. In this case, it suffices that the rear end 55re, 56re of the partition cover portion 53 is located further to the rear than the rear end 45re and the rear end 44re. Also, the rear end 44re may be located further to the rear than the rear end 45re. In this case, it suffices that the rear end 55re, 56re of the partition cover portion 53 is located further to the rear than at least the rear end 44re.

A description has been given for the separate cover 51 of an example having the right and left two partition cover portions 53 and the upper cover portion 52. However, for example, the separate cover 51 may be divided into a plurality of portions such that the right partition cover portion 53 and the left partition cover portion 53 are separated, or the right partition cover portion 53 and the left partition cover portion 53 may be coupled by another member other than the upper cover portion 52.

The base cover 60 of the present teaching is not limited to that of the preferred embodiment described above. It suffices that the base cover 60 has an open portion to expose a head lamp clear cover and a first side lamp clear cover. For example, the base cover may not be located under the separate cover. Also, the base cover may be a single integral member, or may be divided into a plurality of parts.

A description has been given of an example in which the base cover 60 has the base fastening portion 62, and the partition cover portion 53 is attached to the base fastening portion 62. However, the base fastening portion 62 may be omitted to attach the partition cover portion 53 to the front lamp unit 14.

The front end 54fe of the partition cover portion 53 may be a line having a predetermined width, not a point.

In place of the hook 72, a shaft-shaped member whose distal end is thick may be used as a projection portion, while a grommet may be used as the fitting hole 73.

Features of two or more of the various preferred embodiments described above may be combined.

## Claims

1. A saddle type vehicle (1) comprising:
a frame (2) including a head tube (3);
a head lamp (15) including a head lamp light source (41) and a head lamp clear cover (44) disposed in front of the head lamp light source (41);
a first side lamp (16) disposed outside of the head lamp (15) in a vehicle width direction and including a first side lamp light source (42) and a first side lamp clear cover (45) disposed in front of the first side lamp light source (42); and
a front cover (23) at least a portion of which is disposed in front of the head tube (3), and
in which the head lamp (15) and the first side lamp (16) are disposed, wherein
a rear end (44re) of the head lamp clear cover (44) is disposed at a more rearward position than a front end (45fe) of the first side lamp clear cover (45),
the front cover (23) includes:
a base cover (60) including an open portion (67) at which the head lamp clear cover (44) and the first side lamp clear cover (45) are exposed; and
a separate cover (51) formed separately from the base cover (60) and attached to the base cover (60),
the separate cover (51) includes a partition cover portion (53) at least a portion of which is disposed between the head lamp clear cover (44) and the first side lamp clear cover (45), and which separates the head lamp clear cover (44) and the first side lamp clear cover (45),
a front end (54fe) of the partition cover portion (53) is not connected to another portion of the front cover (23),
an outer edge (560) of the partition cover portion (53) extends rearward from the front end (54fe) of the partition cover portion (53),
an inner edge (55I) of the partition cover portion (53) is disposed at a more inward position than the outer edge (560) of the partition cover portion (53) in the vehicle width direction in a front view, and extends rearward from the front end (54fe) of the partition cover portion (53), and
both of the inner edge (55I) and outer edge (560) of the partition cover portion (53) extend rearward from the front end (54fe) of the partition cover portion (53) to a more rearward position than at least one of the rear end (44re) of the head lamp clear cover (44) and a rear end (45re) of the first side lamp clear cover (45),
**characterized in that** the base cover (60) further includes an exposed portion (63) that extends along the inner edge (551) of the partition cover portion (53) and is externally exposed at a more inward position than the partition cover portion (53) in the vehicle width direction, wherein the exposed portion (63) includes a groove portion (63) that extends along the inner edge (551) of the partition cover portion (53).

2. A saddle type vehicle (1) according to claim 1, **characterized in that** at least a portion of the inner edge (55I) and outer edge (560) of the partition cover portion (53) is disposed at a more outward position than the front end (54fe) of the partition cover portion (53) in the vehicle width direction.

3. A saddle type vehicle (1) according to claim 1 or 2, **characterized in that** the base cover (60) further includes a base fastening portion (62) at least a portion of which is disposed between the head lamp (15) and first side lamp (16),
the base fastening portion (62) is fastened with a fastening member (BL) to at least one of the head lamp (15) and first side lamp (16), and
the partition cover portion (53) is overlapped with the base fastening portion (62) such that the fastening member (BL) is hidden by the partition cover portion (53).

4. A saddle type vehicle (1) according to claim 3, **characterized in that** a projection portion (72) that projects in an overlapping direction of the partition cover portion (53) and the base fastening portion (62) is included in one of the partition cover portion (53) and the base fastening portion (62), and
a fitting hole (73) into which the projection portion (72) is inserted to restrict a relative movement of the partition cover portion (53) and the base fastening portion (62) is included in the other of the partition cover portion (53) and the base fastening portion (62).

5. A saddle type vehicle (1) according to any one of claims 1 to 4, **characterized in that** in a side view, a front end (44fe) of the head lamp clear cover (44) is disposed at a more forward position than the front end (45fe) of the first side lamp clear cover (45), and in the side view, the rear end (44re) of the head lamp clear cover (44) is disposed at a more forward position than the rear end (45re) of the first side lamp clear cover (45).

6. A saddle type vehicle (1) according to any one of claims 1 to 5, **characterized by** a second side lamp (17) disposed between the head lamp (15) and the partition cover portion (53) and between the first side lamp (16) and the partition cover portion (53).

7. A saddle type vehicle (1) according to claim 6, **characterized in that** the second side lamp (17) includes:
a second side lamp light source (43) covered with the partition cover portion (53) at least in the front view; and
a lighting body (74a, 74b, 74c) at least a portion of which is disposed at a more forward position than the second side lamp light source (43), and configured to diffuse and transmit light of the second side lamp light source (43), and the lighting body (74a, 74b, 74c) includes:
a first lighting portion (74a) extending along the partition cover portion (53) between the head lamp (15) and the partition cover portion (53);
a second lighting portion (74b) extending along the partition cover portion (53) between the first side lamp (16) and the partition cover portion (53); and
a connecting lighting portion (74c) connecting the first lighting portion (74a) and the second lighting portion (74b) each other at a lower position than the partition cover portion (53).

8. A saddle type vehicle (1) according to any one of claims 1 to 7, **characterized in that** the saddle type vehicle (1) comprises two of the first side lamps (16) disposed on a right side and on a left side of the head lamp (15), respectively, and
the separate cover (51) includes:
two of the partition cover portions (53) that are disposed at both sides of the head lamp (15) in the vehicle width direction and separates the first side lamp (16) on the right side and the head lamp (15) and separates the first side lamp (16) on the left side and the head lamp (15); and
an upper cover portion (52) that is disposed over the head lamp (15) in the front view and connects upper end portions of the two partition cover portions (53) to each other.

9. A saddle type vehicle (1) according to any one of claims 1 to 8, **characterized in that** the inner edge (55I) of the partition cover portion (53) extends rearward from the front end (54fe) of the partition cover portion (53) to a more rearward position than both of the rear end (44re) of the head lamp clear cover (44) and the rear end (45re) of the first side lamp clear cover (45), and
the outer edge (560) of the partition cover portion (53) extends rearward from the front end (54fe) of the partition cover portion (53) to a more rearward position than both of the rear end (44re) of the head lamp clear cover (44) and the rear end (45re) of the first side lamp clear cover (45).

## Patentansprüche

1. Ein Sattel-Typ-Fahrzeug (1), das umfasst:
einen Rahmen (2), der ein Kopfrohr (3) beinhaltet;
einen Hauptscheinwerfer (15), der eine Hauptscheinwerfer-Lichtquelle (41) und eine Hauptscheinwerfer-Klarabdeckung (44), positioniert vor der Hauptscheinwerfer-Lichtquelle (41), beinhaltet;
eine erste Seiten-Leuchte (16), die außerhalb des Hauptscheinwerfers (15) in einer Fahrzeug-Breiten-Richtung positioniert ist, und eine erste Seiten-Leuchten-Lichtquelle (42) und eine erste Seiten-Leuchten-Klarabdeckung (45), positioniert vor der ersten Seiten-Leuchten-Lichtquelle (42), beinhaltet; und
eine Vorder-Abdeckung (23), bei der zumindest ein Abschnitt vor dem Kopfrohr (3) positioniert ist, und in welcher der Hauptscheinwerfer (15) und die erste Seiten-Leuchte (16) positioniert sind, wobei ein Rück-Ende (44re) der Hauptscheinwerfer-Klarabdeckung (44) an einer weiter hinteren Position positioniert ist als ein Vorder-Ende (45fe) der ersten Seiten-Leuchten-Klarabdeckung (45),
die Vorder-Abdeckung (23) beinhaltet:
eine Basis-Abdeckung (60), die einen offenen Abschnitt (67) beinhaltet, an dem die Hauptscheinwerfer-Klarabdeckung (44) und die erste Seiten-Leuchten-Klarabdeckung (45) freigelegt sind; und
eine separate Abdeckung (51), die separat von der Basis-Abdeckung (60) ausgebildet ist und an der Basis-Abdeckung (60) angebracht ist,
die separate Abdeckung (51) beinhaltet einen Partitions-Abdeck-Abschnitt (53), von dem zumindest ein Abschnitt zwischen der Hauptscheinwerfer-Klarabdeckung (44) und der ersten Seiten-Leuchten-Klarabdeckung (45) positioniert ist, und welcher die Hauptscheinwerfer-Klarabdeckung (44) und die erste Seiten-Leuchten-Klarabdeckung (45) separiert,
ein Vorder-Ende (54fe) des Partitions-Abdeck-Abschnitt (53) ist nicht mit einem anderen Abschnitt der Vorder-Abdeckung (23) verbunden,
eine Außen-Kante (560) des Partitions-Abdeckung-Abschnitts (53) erstreckt sich nach hinten von dem Vorder-Ende (54fe) des Partitions-Abdeckung-Abschnitts (53),
eine Innen-Kante (55i) des Partitions-Abdeckung-Abschnitts (53) ist an einer weiter innenliegenden Position als die Außen-Kante (560) des Partitions-Abdeckung-Abschnitts (53), in der Fahrzeug-Breiten-Richtung, in einer Vorder-Ansicht, positioniert und erstreckt sich nach hinten von dem Vorder-Ende (54fe) des Partitions-Abdeckung-Abschnitts (53),
und
beide von der Innen-Kante (55i) und der Außen-Kante (560) des Partitions-Abdeckung-Abschnitts (53) erstrecken sich nach hinten von dem Vorder-Ende (54fe) des Partitions-Abdeckung-Abschnittes (53) zu einer weiter hinter liegenden Position als zumindest eines von dem Rück-Ende (44re) der Hauptscheinwerfer-Klarabdeckung (44) und einem Rück-Ende (45re) der ersten Seiten-Leuchten-Klarabdeckung (45),
**dadurch gekennzeichnet, dass** die Basis-Abdeckung (60) weiterhin einen freiliegenden Abschnitt (63) beinhaltet, der sich entlang der Innen-Kante (55i) des Partitions-Abdeckung-Abschnitts (53) erstreckt und nach außen freigelegt, an einer weiter innenliegenden Position als der Partitions-Abdeck-Abschnitt (53) in der Fahrzeug-Breiten-Richtung, wobei der freiliegende Abschnitt (63) einen Nutabschnitt (63) beinhaltet, der sich entlang der Innen-Kante (55i) des Partitions-Abdeckung-Abschnitts (53) erstreckt.

2. Ein Sattel-Typ-Fahrzeug (1) gemäß Anspruch 1, **dadurch gekennzeichnet, dass** zumindest ein Abschnitt der Innen-Kante (55i) und der Außen-Kante (560) des Partitions-Abdeck-Abschnitt (53) in der Fahrzeug-Breiten-Richtung an einer weiter außenliegenden Position positioniert ist als das Vorder-Ende (54fe) des Partitions-Abdeckung-Abschnitts (53).

3. Ein Sattel-Typ-Fahrzeug (1) gemäß Anspruch 1 oder 2, **dadurch gekennzeichnet, dass** die Basis-Abdeckung (60) weiterhin einen Basis-Befestigungsabschnitt (62), von dem zumindest ein Abschnitt zwischen dem Hauptscheinwerfer (15) und der ersten Seiten-Leuchte (16) positioniert ist, beinhaltet,
der Basis-Befestigungsabschnitt (62) ist mit einem Befestigungselement (BL) an zumindest einem von dem Hauptscheinwerfer (15) und der ersten Seiten-Leuchte (16) befestigt, und
der Partitions-Abdeck-Abschnitt (53) überlappt mit dem Basis-Befestigungsabschnitt (62), so dass das Befestigungselement (BL) durch den Partitions-Abdeck-Abschnitt (53) verdeckt ist.

4. Ein Sattel-Typ-Fahrzeug (1) gemäß Anspruch 3, **dadurch gekennzeichnet, dass** ein Vorsprung-Abschnitt (72), der in eine Überlappungsrichtung des Partitions-Abdeckung-Abschnitts (53) vorseht, und der Basis-Befestigungsabschnitt (62) in einem von dem Partitions-Abdeck-Abschnitt (53) und dem Basis-Befestigungsabschnitt (62) beinhaltet ist, und
ein Einsatz-Loch (73), in welches der Vorsprung-Abschnitt (72) eingesetzt ist, um eine relative Bewegung des Partitions-Abdeckung-Abschnitts (53) und des Basis-Befestigungsabschnitts (62) zu begrenzen, in dem anderen von dem Partitions-Abdeck-Abschnitt (53) und dem Basis-Befestigungsabschnitt (62) beinhaltet ist.

5. Ein Sattel-Typ-Fahrzeug (1) gemäß irgendeinem der Ansprüche 1 bis 4, **dadurch gekennzeichnet, dass** in einer Seiten-Ansicht, ein Vorder-Ende (44fe) der Hauptscheinwerfer-Klarabdeckung (44) an einer weiter vorne liegenden Position positioniert ist als das Vorder-Ende (45fe) der ersten Seiten-Leuchten-Klarabdeckung (45), und in der Seiten-Ansicht, das Rück-Ende (44re) der Hauptscheinwerfer-Klarabdeckung (44) an einer weiter vorne liegenden Position angeordnet ist als das Rück-Ende (45re) der ersten Seiten-Leuchten-Klarabdeckung (45).

6. Ein Sattel-Typ-Fahrzeug (1) gemäß irgendeinem der Ansprüche 1 bis 5,
**gekennzeichnet durch** eine zweite Seiten-Leuchte (17), die zwischen dem Hauptscheinwerfer (15) und dem Partitions-Abdeck-Abschnitt (53) und zwischen der ersten Seiten-Leuchte (16) und dem Partitions-Abdeck-Abschnitt (53) positioniert ist.

7. Ein Sattel-Typ-Fahrzeug (1) gemäß Anspruch 6, **dadurch gekennzeichnet, dass** die zweite Seiten-Leuchte (17) beinhaltet:
eine zweite Seiten-Leuchten-Lichtquelle (43), die mit dem Partitions-Abdeck-Abschnitt (53) zumindest in der Vorder-Ansicht abgedeckt ist; und
einen Beleuchtungskörper (74a, 74b, 74c), von dem zumindest ein Abschnitt an einer weiter vorn liegenden Position positioniert ist als die zweite Seiten-Leuchten-Lichtquelle (43), und der konfiguriert ist, Licht von der zweiten Seiten-Leuchten-Lichtquelle (43) zu streuen und zu übertragen, und der Beleuchtungskörper (74a, 74b, 74c) beinhaltet:
einen ersten Beleuchtungsabschnitt (74a), der sich entlang dem Partitions-Abdeck-Abschnitt (53), zwischen dem Hauptscheinwerfer (15) und dem Partitions-Abdeck-Abschnitt (53), erstreckt;
einen zweiten Beleuchtungsabschnitt (74b), der sich entlang dem Partitions-Abdeck-Abschnitt (53), zwischen der ersten Seiten-Leuchte (16) und dem Partitions-Abdeck-Abschnitt (53), erstreckt; und
einen Verbindungs-Beleuchtungsabschnitt (74c), der den ersten Beleuchtungsabschnitt (74a) und den zweiten Beleuchtungsabschnitt (74b) miteinander an einer weiter unten liegenden Position als der Partitions-Abdeck-Abschnitt (53) verbindet.

8. Ein Sattel-Typ-Fahrzeug (1) gemäß irgendeinem der Ansprüche 1 bis 7, **dadurch gekennzeichnet, dass** das Sattel-Typ-Fahrzeug (1) zwei von den ersten Seiten-Leuchten (16) umfasst, die jeweils an einer rechten Seite und an einer linken Seite von dem Hauptscheinwerfer (15) positioniert sind und
die separate Abdeckung (51) beinhaltet:
zwei von den Partitions-Abdeckung-Abschnitten (53), die an beiden Seiten des Hauptscheinwerfers (15) in der Fahrzeug-Breiten-Richtung positioniert sind, und die erste Seiten-Leuchte (16) an der rechten Seite und den Hauptscheinwerfer (15) separieren und die erste Seiten-Leuchte (16) an der linken Seite und den Hauptscheinwerfer (15) separieren; und
einen oberen Abdeckungsabschnitt (52), der über dem Hauptscheinwerfer (15) in der Vorder-Ansicht positioniert ist, und obere Endabschnitte der zwei Partitions-Abdeckung-Abschnitte (53) miteinander verbindet.

9. Ein Sattel-Typ-Fahrzeug (1) gemäß irgendeinem der Ansprüche 1 bis 8, **dadurch gekennzeichnet, dass** die Innen-Kante (55) des Partitions-Abdeckung-Abschnitts (53) sich nach hinten von dem Vorder-Ende (54fe) des Partitions-Abdeckung-Abschnitts (53) zu einer weiter hinter liegenden Position als beide von dem Rück-Ende (44re) der Hauptscheinwerfer-Klarabdeckung (44) und dem Rück-Ende (45re) der ersten Seiten-Leuchten-Klarabdeckung (45) erstreckt, und
die Außen-Kante (560) des Partitions-Abdeckung-Abschnitts (53) sich nach hinten von dem Vorder-Ende (54fe) des Partitions-Abdeckung-Abschnitts (53) zu einer weiter hinten liegenden Position als beide von dem Rück-Ende (44re) der Hauptscheinwerfer-Klarabdeckung (44) und dem Rück-Ende (45re) der ersten Seiten-Leuchten-Klarabdeckung (45) erstreckt.

## Revendications

1. Véhicule à selle (1) comprenant :
un châssis (2) incluant un tube de tête (3) ;
un phare (15) incluant une source de lumière de phare (41) et un carénage translucide de phare (44) agencé devant la source de lumière de phare (41) ;
un premier feu latéral (16) agencé à l'extérieur du phare (15) dans une direction de la largeur du véhicule et incluant une source de lumière du premier feu latéral (42) ainsi qu'un carénage translucide du premier feu latéral (45) agencé devant la source de lumière du premier feu latéral (42) ; et
un carénage avant (23) dont au moins une portion est agencée devant le tube de tête (3), et à l'intérieur duquel sont agencés le phare (15) et le premier feu latéral (16), dans lequel
une extrémité arrière (44re) du carénage translucide du phare (44) est agencée à une position plus à l'arrière qu'une extrémité avant (45fe) du carénage translucide du premier feu latéral (45),
le carénage avant (23) comprend :
un carénage de base (60) incluant une portion ouverte (67) dans laquelle sont exposés le carénage translucide du phare (44) et le carénage translucide du premier feu latéral (45) ; et
un carénage séparé (51) formé séparément du carénage de base (60) et attaché au carénage de base (60),
le carénage séparé (51) inclut une portion de carénage de partition (53) dont au moins une portion est agencée entre le carénage translucide du phare (44) et le carénage translucide du premier feu latéral (45), et qui sépare le carénage translucide du phare (44) et le carénage translucide du premier feu latéral (45),
une extrémité avant (54fe) de la portion de carénage de partition (53) n'est pas connectée à une autre portion du carénage avant (23),
un bord externe (560) de la portion de carénage de partition (53) s'étend vers l'arrière depuis l'extrémité avant (54fe) de la portion de carénage de partition (53),
un bord interne (55I) de la portion de carénage de partition (53) est agencé dans une position plus à l'intérieur que le bord externe (560) de la portion de carénage de partition (53) en direction de la largeur du véhicule en vue de face, et s'étend vers l'arrière depuis l'extrémité avant (54fe) de la portion de carénage de partition (53), et
le bord interne (551) et le bord externe (560) de la portion de carénage de partition (53) s'étendent tous deux vers l'arrière depuis l'extrémité avant (54fe) de la portion de carénage de partition (53) vers une position plus à l'arrière qu'au moins une extrémité parmi l'extrémité arrière (44re) du carénage translucide du phare (44) et une extrémité arrière (45re) du carénage translucide du premier feu latéral (45),
**caractérisé en ce que** le carénage de base (60) comprend en outre une portion exposée (63) qui s'étend le long du bord interne (551) de la portion de carénage de partition (53) et qui est exposée extérieurement dans une position plus à l'intérieur que la portion de carénage de partition (53) en direction de la largeur du véhicule, dans lequel la portion exposée (63) comprend une portion de rainure (63) qui s'étend le long du bord interne (551) de la portion de carénage de partition (53).

2. Véhicule à selle (1) selon la revendication 1, **caractérisé en ce que** au moins une portion du bord interne (55I) et du bord externe (560) de la portion de carénage de partition (53) est agencée dans une position plus à l'extérieur que l'extrémité avant (54fe) de la portion de carénage de partition (53) en direction de la largeur du véhicule.

3. Véhicule à selle (1) selon la revendication 1 ou 2, **caractérisé en ce que**
le carénage de base (60) inclut en outre une portion d'attachement de base (62) dont au moins une portion est agencée entre le phare (15) et le premier feu latéral (16),
la portion d'attachement de base (62) est attachée avec un élément d'attachement (BL) à au moins un feu parmi le phare (15) et le premier feu latéral (16), et
la portion de carénage de partition (53) est chevauchée par la portion d'attachement de base (62) de telle sorte que l'élément d'attachement (BL) est caché par la portion de carénage de partition (53).

4. Véhicule à selle (1) selon la revendication 3, **caractérisé en ce que**
une portion de projection (72) qui se projette dans une direction de chevauchement de la portion de carénage de partition (53) et de la portion d'attachement de base (62) est incluse dans une portion parmi la portion de carénage de partition (53) et la portion d'attachement de base (62), et
un trou d'ajustement (73) dans lequel est insérée la portion de projection (72) pour restreindre un déplacement relatif entre la portion de carénage de partition (53) et la portion d'attachement de base (62) est inclus dans l'autre portion parmi la portion de carénage de partition (53) et la portion d'attachement de base (62).

5. Véhicule à selle (1) selon l'une quelconque des revendications 1 à 4, **caractérisé en ce que**
en vue de côté, une extrémité avant (44fe) du carénage translucide du phare (44) est agencée à une position plus à l'avant que l'extrémité avant (45fe) du carénage translucide du premier feu latéral (45), et
en vue de côté, l'extrémité arrière (44re) du carénage translucide du phare (44) est agencée à une position plus à l'avant que l'extrémité arrière (45re) du carénage translucide du premier feu latéral (45).

6. Véhicule à selle (1) selon l'une quelconque des revendications 1 à 5, **caractérisé par** un deuxième feu latéral (17) agencé entre le phare (15) et la portion de carénage de partition (53) et entre le premier feu latéral (16) et la portion de carénage de partition (53).

7. Véhicule à selle (1) selon la revendication 6, **caractérisé en ce que**
le deuxième feu latéral (17) comprend :
une deuxième source de lumière du feu latéral (43) recouverte par la portion de carénage de partition (53) au moins en vue de face ; et
un corps d'éclairage (74a, 74b, 74c) dont au moins une portion est agencée à une position plus à l'avant que la deuxième source de lumière du feu latéral (43), et configuré pour diffuser et transmettre la lumière de la deuxième source de lumière du feu latéral (43), et
le corps d'éclairage (74a, 74b, 74c) comprend :
une première portion d'éclairage (74a) qui s'étend le long de la portion de carénage de partition (53) entre le phare (15) et la portion de carénage de partition (53) ;
une deuxième portion d'éclairage (74b) qui s'étend le long de la portion de carénage de partition (53) entre le premier feu latéral (16) et la portion de carénage de partition (53) ; et
une portion d'éclairage de connexion (74c) qui connecte la première portion d'éclairage (74a) et la deuxième portion d'éclairage (74b) entre elles dans une position plus basse que la portion de carénage de partition (53).

8. Véhicule à selle (1) selon l'une quelconque des revendications 1 à 7, **caractérisé en ce que**
le véhicule à selle (1) comprend deux des premiers feux latéraux (16) agencés respectivement sur un côté droit et un côté gauche du phare (15), et
le carénage séparé (51) comprend :
deux des portions de carénage de partition (53) qui sont agencées des deux côtés du phare (15) en direction de la largeur du véhicule, et séparant le premier feu latéral (16) sur le côté droit du phare (15), et séparant le premier feu latéral (16) sur le côté gauche du phare (15) ; et
une portion de carénage supérieur (52) qui est agencée par-dessus le phare (15) en vue de face et connecte entre elles des portions d'extrémité supérieure des deux portions de carénage de partition (53).

9. Véhicule à selle (1) selon l'une quelconque des revendications 1 à 8, **caractérisé en ce que**
le bord interne (551) de la portion de carénage de partition (53) s'étend vers l'arrière depuis l'extrémité avant (54fe) de la portion de carénage de partition (53) vers une position plus à l'arrière que l'extrémité arrière (44re) du carénage translucide du phare (44) et que l'extrémité arrière (45re) du carénage translucide du premier feu latéral (45), et
le bord externe (560) de la portion de carénage de partition (53) s'étend vers l'arrière depuis l'extrémité avant (54fe) de la portion de carénage de partition (53) vers une position plus à l'arrière que l'extrémité arrière (44re) du carénage translucide du phare (44) et que l'extrémité arrière (45re) du carénage translucide du premier feu latéral (45).
